# EUROPEAN PATENT APPLICATION

(11) **EP 3 151 353 A1**
(43) Date of publication of application: **05.04.2017**
(21) Application number: 16185475.7
(22) Date of filing: 24.08.2016
(51) Int. Cl.: H02G 5/06, H02G 5/00

(54) **A CLICK-FIT CASING FOR A BUSBAR**

(30) Priority: 29.09.2015 TR 201511978
(71) Applicant: EAE Elektrik Asansör Endüstrisi Insaat Sanayi ve Ticaret Anonim Sirketi, 34510 Istanbul (TR)
(72) Inventor: YILDIRIM, Sultan Gökhan, 34510 Istanbul (TR)
(74) Representative: Dereligil, Ersin

(57) **Abstract**

A busbar casing (10) used for protecting conductors (50) of a busbar system, siad casing comprising:

- a slot (70) ensuring the click-fit coupling of the vertical body (20) with the horizontal body (30), and

- a tooth (80) of the vertical body (20) ensuring the click-fit coupling with said slot (70) of the horizontal body (30).

## Description

### The Related Art

The invention relates to a busbar used in energy distribution systems for protecting conductive materials made of copper and aluminium materials from external environment and possible failures.

The invention particularly relates to a busbar that does not comprise a connecting piece.

### The Prior Art

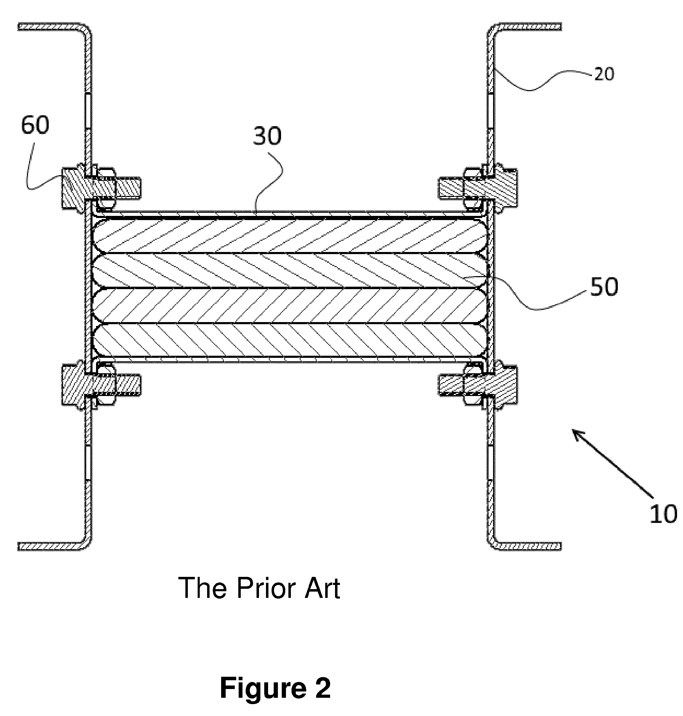

In the prior art applications, among the components of a busbar protecting conductors, mounting is made by using a screw, nut, or any other connecting component at the joining point of a horizontal body with a vertical body. In this case, when the structure needs to be strong, it depends on the joining components, through which all the force has to go through. This may lead to different situations depending on the quality of the material used. Figure 2 gives a view of a busbar (10) comprising a connecting component (60) according to the prior art. It can be seen that the horizontal body (20) and the vertical body (40) forming the relevant busbar (10) are joined by a connecting component (60).

In the literature, one of the patents about this subject is the European Patent Application No. EP0589307B1. In the relevant application, it is disclosed that the busbar found within the insulating body is fixed by means of some connecting components. However, as disclosed above, in applications that require high strength, the force goes through said connecting components.

As a result, the above said drawbacks and the inadequacy of the prior art solutions about the subject have necessitated an improvement in the related technical field.

### Purpose of the Invention

The invention relates to a click-fit busbar, which meets the above said requirements, eliminates all of the drawbacks, and brings some additional advantages.

The primary purpose of the invention is to ensure mounting of the busbar according to the invention without the need for any connecting piece. In this way, costs will be reduced and at the same time, easier mounting would be achieved.

A purpose of the invention is to have a structure that would provide high strength, since it has a click-fit structure. By means of a busbar that acts like a single body, the amount of grounding that needs to pass through becomes higher. In this way, safer operation is ensured at places that require high strength.

In order to achieve the above said purposes, a busbar that does not comprise a connecting piece is developed.

The structural and characteristic features of the invention and all of its advantages shall be understood better with the figures and the detailed description given below in reference to the figures, and therefore, the assessment should be made by taking into account the said figures and detailed explanations.

### Figures for Better Understanding of the Invention

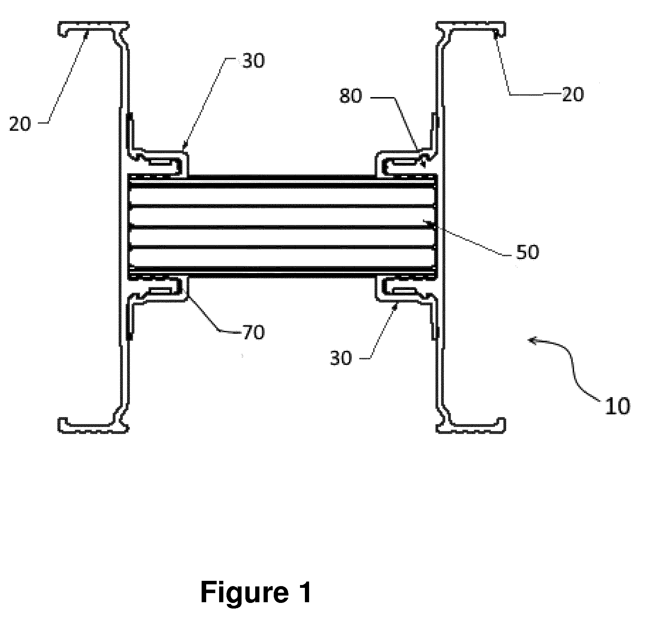

Figure 1 provides a view of the busbar having a click-fit structure.
Figure 2 gives a view of a busbar comprising a connecting component according to the prior art.

Drawings do not have to be scaled and details not necessary for understanding the present invention may be neglected. Moreover, components which are at least widely equal or which have at least widely equal functions are shown with the same number.

### Description of Parts References

**10. Busbar**
**20.** Vertical body
**30.** Horizontal body
**50.** Conductor
**60.** Connecting component
**70.** Slot
**80.** Tooth

### Detailed Description of the Invention

In this detailed description, the preferred embodiments of the click-fit busbar (10) according to the invention are only disclosed for better understanding of the subject without forming any limiting effect.

It is a busbar (10), which is used for protection of conductors (50) in electricity distribution systems, which does not comprise a connecting piece, and the body pieces of which have a click-fit mounting structure. Said busbar (10) is used for protecting conductors (50) from external environments and possible failures. The conductors (50) are made of copper or aluminium in order to be used in distribution of electricity.

The busbar (10) according to the invention comprises horizontal bodies (20) that ensure holding of conductors (50) from bottom and top. Said horizontal body (20) comprises slots (70) ensuring its coupling with the vertical body (30). And said vertical body (30) has teeth (80) that enter into the slots (70) formed on the horizontal body (20). Said horizontal body (20) and vertical body (30) are made of aluminium. In this way, they act as a single body following mounting. Formability and high strength are reasons for preference in aluminium.

The busbar (10) developed can be used in the protection pieces used for protecting conductors in electricity distribution systems.

## Claims

1. A busbar (10) used for protecting conductors (50) in electricity distribution systems, said busbar (10) **characterized by** comprising:
- a slot (70) ensuring coupling of the horizontal body (20) with the vertical body (30), and
- a tooth (80) enabling entrance of the vertical body (30) into said slot (70).

2. A busbar (10) according to Claim 1, **characterized in that**; said busbar (10) is made of aluminium.
